# EUROPÄISCHE PATENTSCHRIFT

(11) **EP 1 154 891 B1**
(45) Veröffentlichungstag und Bekanntmachung des Hinweises auf die Patenterteilung: **10.09.2003**
(21) Anmeldenummer: 00914084.9
(22) Anmeldetag: 23.02.2000
(51) Int. Cl.: B29C 63/04, B27N 7/00

(54) **DURCHLAUFVERFAHREN UND VORRICHTUNG ZUM ANBRINGEN EINES BESCHICHTUNGSMATERIALS AN PORÖSEN SCHMALSEITEN VON WERKSTÜCKEN**
CONTINUOUS PROCESS AND DEVICE FOR APPLYING A COATING MATERIAL TO POROUS NARROW SIDES OF WORKPIECES
PROCESSUS CONTINU ET DISPOSITIF POUR APPLIQUER UN MATERIAU DE REVETEMENT SUR DES CHANTS POREUX DE PIECES A USINER

(30) Priorität: 24.02.1999 DE 19907939
(43) Veröffentlichungstag der Anmeldung: 21.11.2001
(73) Patentinhaber: HOMAG MASCHINENBAU AG, D-72296 Schopfloch (DE)
(72) Erfinder: EISELE, Klaus, D-72160 Horb-Ihlingen (DE); SCHMID, Johannes, D-72181 Starzach-Wachendorf (DE); KALMBACH, Kurt, D-72275 Alpirsbach (DE)
(74) Vertreter: HOFFMANN - EITLE
(86) Internationale Anmeldenummer: EP0001489
(87) Internationale Veröffentlichungsnummer: WO00050221

(56) Entgegenhaltungen:
- WO-A-99/04944
- DE-A- 3 428 503
- DE-A- 4 239 336
- DE-U- 29 817 408
- US-A- 5 312 504

## Beschreibung

### Technisches Gebiet

Die vorliegende Erfindung betrifft ein Durchlaufverfahren, mit dem poröse Schmalseiten von Werkstücken aus Holz-, Holzaustauschwerkstoffen oder holzähnlichen Werkstoffen, wie beispielsweise eine Platte, insbesondere Spanplatte, in einem Durchlauf vergütet, mit einem separaten Beschichtungsmaterial beschichtet und hiermit verklebt werden. Ferner betrifft die Erfindung eine Durchlaufmaschine zur Durchführung des genannten Verfahrens.

### Stand der Technik

Zur Vergütung der Schmalseiten oder Kanten eines Werkstücks ist deren Beschichtung mit einem Materialstreifen seit langem bekannt. Grundsätzlich unterscheidet man hierbei zwischen stationären Maschinen, in denen das entsprechend zu bearbeitende Werkstück stationär auf einem Bearbeitungstisch aufgespannt ist und die Kantenanleimeinrichtung um das Werkstück herum geführt wird, und Durchlaufmaschinen, in denen das Werkstück an den einzelnen Bearbeitungsaggregaten vorbeigeführt wird. Durchlaufmaschinen sind zwar nicht so flexibel an unterschiedliche Werkstücke anpassbar wie die stationären Maschinen, jedoch sind hiermit höhere Produktionsraten erzielbar.

Für die vorliegende Anmeldung sind nur Durchlaufmaschinen von Interesse. So ist in der EP 0 689 910 B1 ein Durchlaufverfahren beschrieben, bei dem ein expandierendes Kantenverfüllprodukt auf die Kante oder Schmalseite eines Werkstückes aufgetragen wird. Nach dem Auftrag dieses Kantenverfüllprodukts wird der Kantenbereich einer Trocknung unterworfen und geschliffen. Die derart vorbereitete Werkstückkante wird nun in einen Beschichtungsprozeß einbezogen, mit dem die gesamte Platte mit einem Dekorpapier versehen wird. Hierzu wird ein Kleber nicht nur auf Schmalseiten des Werkstücks aufgebracht, sondern auch auf die Front- bzw. spätere Sichtseite. Hiernach wird das Papier aufgelegt und angeklebt. Dieses Verfahren ist also nicht für das separate Aufbringen eines Beschichtungsmaterialstreifens auf eine Schmalseite eines Werkstücks gedacht, sondern zum Beschichten der ganzen Platte. Bei diesem speziellen Beschichtungsverfahren sind zudem zwei verschiedene Auftragsmaterialien einzusetzen, um eine poröse Schmalseite eines Werkstückes für das nachfolgende Beschichten vorzubereiten und um die Verklebung des Dekors zu ermöglichen. So wird ein spezielles, expandierendes Verfüllprodukt auf die poröse Schmalseite eines Werkstückes aufgetragen und später dieser entsprechend vorbereitete Bereich zusammen mit dem restlichen Flächenbereich der Platte mit einem speziellen Klebstoffprodukt versehen. Damit bauen hierfür vorgesehene Durchlaufmaschinen entsprechend lang und die Kosten sowie die Dauer des Verfahrens sind unzweckmäßig hoch.

Ein ähnliches Verfahren ist aus der EP 0 744 260 A1 bekannt. Hier wird eine poröse Schmalseite eines Werkstückes im Durchlaufverfahren durch ein sogenanntes Heißeinspachteln vergütet. Ein dünnes Beschichtungsmaterial wird hiernach unter Verwendung eines separaten Klebstoffs aufgeklebt. Wiederum sind zwei verschiedene Auftragsmaterialien in verschiedenen Maschinen zum Vergüten und Beleimen bzw. Verkleben notwendig. Entsprechend sind die gleichen Probleme vorhanden wie beim eingangs erörterten Stand der Technik.

In der DE 298 17 408 ist ein Verfahren zum Anleimen eines bandförmigen Belages an eine Kante eines Plattenelements, insbesondere einer Span-, Faser- oder Massivholzplatte offenbart. Hier wird nach Auftragen eines Schmelzklebstoffes der bandförmige Belag zunächst an die Kante des Plattenelements angeklebt und dort fixiert. Von dieser Längszone ausgehend weitet man den Andruckbereich stufenweise oder allmählich aus, bis der Belag an der gesamten Schmalfläche angepresst ist. Als Belagmaterialien sind Melamin und Polyester wie auch Furniere genannt. Der hier verwendete Schmelzklebstoff ist mit einem Füllstoff versetzt, der als konsistenzbestimmende Füllmasse für den Schmelzkleber dient.

Auch aus der DD 240 530 A1 ist ein Verfahren zum Verschließen offener Poren in Spanplattenkanten in Vorbereitung auf eine Profilummantelung bekannt. Diese Vorbereitung für die Profilummantelung sieht das Aufbringen einer Paste vor, die aus einem UP-Harz, Füllstoffen sowie einem Härtersystem aus zwei organischen Peroxiden unterschiedlicher Aktivität besteht und in die Poren eingedrückt und gehärtet wird. Das derart bearbeitete Profil wird dann geschliffen. In der gleichen Weise wie beim eingangs dargestellten Stand der Technik erfolgt später ein separater Kleberauftrag zum Aufkleben eines Beschichtungsmaterials. Damit weist auch dieses bekannte Verfahren die zuvor genannten Nachteile auf.

Aus der DE 42 39 336 A1 ist schließlich ein Durchlaufverfahren zum Beschichten von Trägermaterial im sogenannten Postforming bekannt. Hierbei wird ein einstückig aus der Frontseite eines Werkstücks in den zu beschichtenden Übergangsbereich (Schmalseite) herausgeführtes Beschichtungsmaterial unter Verwendung von Schmelzkleber auf den Übergangsbereich aufgeklebt. Hier stehen die speziellen Gegebenheiten beim Postforming im Vordergrund. So wird herausgestellt, dass zur Verklebung des Beschichtungsmaterials an die Stirn- bzw. Schmalseite des Werkstückes dieses umgebogen werden muß und dementsprechend Rückstellkräfte überwunden werden müssen. Es ist also hier als wesentlich herausgestellt, dass die Anfangshaftung des verwendeten Klebers, hier ein Schmelzkleber, sehr gut sein muß. In dieser Druckschrift ist als Vorteil genannt, dass nun auch das Postforming-Verfahren bei Werkstücken zum Einsatz kommt, die bisher aus Kostengründen lediglich mit separaten sogenannten Dick-PVC-Kanten ausgestattet wurden. Damit ist klar herausgestellt, dass das Beschichten mit separaten Materialstreifen durch das Postforming ersetzt werden soll.

Aus der US 5,085,891 ist ein Verfahren und eine Vorrichtung zur Schmalseitenabdichtung einer Verbundplatte bekannt. Bei dem hierin beschriebenen Verfahren wird ein thermoplastischer Heißschmelzkleber mittels einer der Schmalseite entsprechend profilierten, beheizten Einpressfläche eines Eisenkörpers auf die Schmalseite aufgetragen und eingedrückt. Ein Aufbringen eines Beschichtungsmaterials ist hier nicht angedacht. Im Gegenteil, im vorliegenden Fall soll die Abdichtung allein durch den aufgetragenen und eingedrückten Kleber erfolgen.

Schließlich sind als allgemeiner technischer Hintergrund noch die US 3,967,581 und die DD 242 590 A1 zu nennen. Aus der genannten US-Druckschrift ist ein Verfahren zum Aufbringen einer schnelltrocknenden viskosen Flüssigkeit zum Vergüten einer Schmalseite eines Werkstücks bekannt. Diese Schmalseite wird dann nachträglich bedruckt. In der DD-Druckschrift ist ein Verfahren zur Verfestigung der Oberfläche von plattenförmigen Holzpartikelwerkstoffen beschrieben. Es soll durch das Auftragen, Trocknen und anschließendes Pressen in einer Heißpresse ein Gemisch aus einem duroplastisch härtbaren Harz und einem Thermoplast die Plattenoberfläche nachträglich verfestigt werden. Damit soll ein bisher notwendiges Abschleifen derartiger Platten weitgehend wegfallen und die Kratzfestigkeit erhöht werden.

### Darstellung der Erfindung

Das der Erfindung zugrunde liegende technische Problem besteht darin, ein Durchlaufverfahren bereitzustellen, mit dem poröse Schmalseiten von Werkstücken, insbesondere aus Holz- oder Holzersatzwerkstoffen, in einem Durchlauf technisch weniger aufwendig und möglichst kostengünstiger vergütet, mit einem separaten Beschichtungsmaterial beschichtet und hiermit verklebt werden können. Darüber hinaus liegt der Erfindung das weitere technische Problem zugrunde, eine Durchlaufmaschine bereitzustellen, die zur Durchführung des Verfahrens geeignet ist und kürzer baut.

Diese technischen Probleme werden durch ein Verfahren mit den Merkmalen des Anspruchs 1 und durch eine Vorrichtung mit den Merkmalen des Anspruchs 11 gelöst.

Erfindungsgemäß wird auf die Schmalseite des sich kontinuierlich bewegenden Werkstücks eine kombinierte Füll- und Verklebungsmasse aufgetragen. Auf die aufgetragene, noch nicht ausgehärtete und damit noch klebefähige Füll- und Verklebungsmasse wird das separate, streifenförmige Beschichtungsmaterial aufgebracht. Das Beschichtungsmaterial wird dann an die Profilform der Werkstückschmalseite angepaßt angedrückt und dadurch, dass die Füll- und Verklebungsmasse schnell erhärtet, hiermit sauber und ohne Oberflächenunregelmäßigkeiten zu hinterlassen, verklebt. Wie bereits zuvor erörtert wurde, ist in der DE 42 39 336 A1 klar herausgestellt, dass das Beschichten mit einem separaten Materialstreifen durch das Postforming ersetzt werden soll. Also entnimmt der Fachmann hieraus bezüglich dem zuvor genannten technischen Problem einen zur Erfindung diametralen Lösungsansatz.

Der Erfindung liegt der Gedanke zugrunde, die bisher zeitlich voneinander getrennten Bearbeitungsschritte, d.h. das Vergüten der Oberfläche der Werkstückschmalseite und das Aufkleben des Beschichtungsmaterials, zu einem einzigen Verfahrensschritt zusammenzuführen. Dafür wird erstmals eine kombinierte Füllund Verklebungsmasse auf die poröse Werkstückschmalseite aufgebracht. Das Aufbringen der Füll- und Verklebungsmasse erfolgt insbesondere derart, dass die Masse eine gewisse Schichtdicke auf der Schmalseite aufweist, also hierauf "erhaben" ist. Diese Masse wird dann unter Zwischenschaltung des normalerweise unmittelbar nach dem Aufbringen zugeführten separaten Beschichtungsmaterials in die Poren des Werkstücks eingedrückt. Gleichzeitig wird durch das Andrücken des Beschichtungsmaterials dieses mit der darunter befindlichen Masse verbunden, aber auch mit dem Werkstück verklebt. Die Füll- und Verklebungsmasse ist hierzu so viskos, dass die Poren des Holzwerkstoffes des Werkstückes vollständig gefüllt werden. Gleichzeitig erfolgt aber auch durch das Aufbringen des Beschichtungsmaterials eine Vergleichmäßigung an der Schmalseitenoberfläche, das Beschichtungsmaterial liegt sozusagen auf dem erhabenen geglätteten Kleber auf und es werden hierdurch unter Umständen noch vorhandene Unregelmäßigkeiten ausgeglichen.

Das erfindungsgemäße Verfahren hat den Vorteil, dass erstmals im Durchlaufverfahren auch äußerst poröse Werkstoffe in kürzester Zeit beschichtet werden können. Insbesondere ist es mit dem erfindungsgemäßen Verfahren auch erstmals möglich, nicht nur an sich bekannten Kantenbeschichtungen aufzubringen, wie beispielsweise auch PVC-Kanten, sondern auch äußerst dünne Dekorpapiere, wie beispielsweise Melaminharzpapiere etc. mit einem Flächengewicht zwischen 20-80 g/m², insbesondere Papiere mit einem Flächengewicht von 30-50 g/m², im Durchlaufverfahren an porösen Werkstoffen aufzukleben. Die bisherigen Verfahren waren dazu nicht in der Lage, oder es war eben notwendig, die Schmalseite erst zu vergüten und dann, nach dem Vergüten und möglicherweise Nachschleifen das Papier aufzukleben. Diese Verfahren nach dem Stand der Technik erforderten aber sehr lang bauende Durchlaufmaschinen, da für jeden Bearbeitungsschritt zumindest ein Aggregat erforderlich war und diese verschiedenen Aggregate hintereinandergereiht werden mussten. Wie bereits zuvor ausgeführt, mussten ja beim Stand der Technik separate Vergütungseinrichtungen und hiervon getrennte Aufkaschiereinrichtungen in der Durchlaufmaschine hintereinander angeordnet eingebaut werden.

Sehr gute Ergebnisse werden erzielt, wenn das Beschichtungsmaterial während des Andrückvorgangs an die Werkstückschmalseite zum einen derart stark flächig angedrückt wird, dass die darunter befindliche, noch klebefähige Füll- und Verklebungsmasse in den porösen Werkstückwerkstoff eingepresst wird, zum anderen aber auch das Beschichtungsmaterial an die derart geglättete Werkstückschmalseite angeformt und hiermit verklebt wird. Diese Verfahrensweise ist hervorragend mit einem Form- bzw. Glättelement durchzuführen, das eine der Profilform der Werkstückschmalseite ähnliche, aber insgesamt geringfügig kleinere Gleitfläche hat, die unter Druckaufbringung an die gesamte, mit dem Beschichtungsmaterial versehene Werkstückschmalseite anlegbar ist. Grundsätzlich ist hierfür auch ein Gleitschuh gemäß der DE 196 90 273 A1 einsetzbar.

Mit dem erfindungsgemäßen Verfahren sind bei Verwendung von dünnen Dekorpapieren sehr glatte Oberflächen erzielbar, wenn die Füll- und Verklebungsmasse nach dem Auftragen auf die Schmalseite des Werkstücks mit einem Werkzeug glattgestrichen und vorteilhafterweise auch hierbei in die offenen Poren des Werkstücks eingedrückt wird, bevor das Beschichtungsmaterial dann auf die glattgestrichene Massen aufgebracht wird. Grundsätzlich ist dieser Vorgang zur Erzielung akzeptabler Ergebnisse aber nicht zwingend erforderlich. Als Werkzeug zur Durchführung dieses optionalen Verfahrensschrittes ist eine Rakel oder Spachtel (eventuell beheizt) insbesondere ein Glättelement, das eine Glättstrecke bildet, einsetzbar. Selbstverständlich sind aber auch andere Streich- und Glättelemete verwendbar, die die zuvor beschriebene Wirkung haben.

Grundsätzlich wird bei Durchlaufverfahren versucht, möglichst viele verschiedene Bearbeitungsschritte in einer Durchlaufmaschine zu integrieren. So ist es sehr vorteilhaft, wenn bei einem erfindungsgemäßen Verfahren die Schmalseite des Werkstücks vor dem Auftragen einer kombinierten Füll- und Verklebungsmasse auf die Schmalseite des sich kontinuierlich bewegenden Werkstücks in der gleichen Maschine mit einer gewünschten Profilform versehen wird und hiernach die profilierte Seite einem Schleifvorgang unterzogen wird. Damit ist es möglich, beliebige Profilformen an der Schmalseite auszubilden, beispielsweise durch Fräsen, Sägen oder dergleichen, und die teilweise sehr poröse Schmalseite durch den optionalen Schleifvorgang vorzuglätten.

Indem die Schmalseite des Werkstückes vor dem Aufbringen der Füll- und Verklebungsmasse bzw. nach dem Profilieren und den optionalen Schleifen vorgewärmt wird, wird eine noch bessere Haftung der Masse unter auch bessere Glättung der Schmalseite erzielt.

Durch Zuführung von Wärme von der Außenseite auf die Schmalseite des Werkstücks nach dem Aufbringen des separaten, streifenförmigen Beschichtungsmaterials auf die klebefähige Füll- und Verklebungsmasse erfolgt, je nach Art der Masse, eine schnellere Aushärtung bzw. das Beschichtungsmaterial kann besser an die profilierte Kante angelegt werden.

Bei einer durch Abkühlen härtenden Füll- und Verklebungsmasse wird durch aktives Kühlen des aufgeklebten Beschichtungsmaterials der Härtungsvorgang unterstützt.

Insbesondere bei der Verwendung eines Schmelzklebers als Füllund Verklebungsmasse sind sehr gute Oberflächenergebnisse erzielbar. Außerdem sind die Werkstückschmalseiten mit der darauf erfindungsgemäß aufgebrachten Beschichtung weiter bearbeitbar, wenn dies notwendig sein sollte. Beispielsweise kann ein Feinschleifvorgang folgen oder ein Kantenüberstand bündig gefräst werden. Als Klebstoffsystem kommt hier insbesondere eine aushärtbare thermoplastische Masse auf EVA-, Polyamid-, Polyolefin oder PU-Basis zum Einsatz.

Das Aufbringen der Füll- und Verklebungsmasse auf die Schmalseite des Werkstückes kann gemäß an sich bekannter Verfahren durchgeführt werden. Insbesondere ist ein Aufsprühen, Aufrollen oder ein Aufbringen mittels einer Schlitzdüse und ein Heißeinspachteln möglich.

Die Durchlaufmaschine zur Durchführung des erfindungsgemäßen Verfahrens weist eine Fördereinrichtung zum kontinuierlichen Fördern des Werkstücks durch die Durchlaufmaschine auf. Die Fördereinrichtung selbst kann verschiedenster Bauart sein. Grundsätzlich kommen alle im Stand der Technik bekannten Bauarten in Frage. Die Durchlaufmaschine weist ferner eine Auftragseinrichtung zum Aufbringen einer kombinierten Füll- und Verklebungsmasse auf. Die Auftragseinrichtung ist so gestaltet, dass die Füll- und Verklebungsmasse auf die sich kontinuierlich vorbeibewegende Schmalseite des Werkstückes aufgetragen wird. Vorteilhafterweise erfolgt dieser Auftrag im Wesentlichen über die gesamte Breite der zu beschichtenden Schmalseite des Werkstückes. Auf diese Auftragseinrichtung folgt eine Zuführeinrichtung zum kontinuierlichen Zuführen des separaten, streifenförmigen Beschichtungsmaterials auf die aufgetragene, aber noch nicht ausgehärtete und damit noch klebefähige Füllund Verklebungsmasse, Daran schließt sich eine Andrückeinrichtung an, die vorzugsweise mit einer in Förderrichtung des Werkstücks sich längserstreckenden und der Profilform der Werkstückschmalseite sich anpassenden Gleitfläche zum Andrücken des Beschichtungsmaterials formangepasst an die Werkstückschmalseite unter Druck und zum Einpressen der darunter befindlichen Füll- und Verklebungsmasse in die poröse Oberfläche der Schmalseite des Werkstückes versehen ist.

Für eine noch bessere Oberflächenqualität ist die Gleitfläche sehr glatt und beispielsweise mit Teflon oder irgendeinem reibungsmindernden Material beschichtet. Hervorragende Ergebnisse wurden auch mit Gleitflächenbeschichtungen aus beispielsweise Polyamid, Kohlecompound, Kunststoff mit Glas erzielt.

Hervorragende Anschmiegeigenschaften werden dann erzielt, wenn das Form- bzw. Glättelement an seiner der Gleitfläche entgegengesetzten Außenseite sich im Querschnitt senkrecht zur Gleitfläche erstreckende Längsrippen und Längsschlitze aufweist. Damit wird eine in Durchlaufrichtung des Werkstücks notwendige gewisse Steifigkeit erzielt, gleichzeitig aber die Anpassbarkeit des Formschuhs an das Profil der Schmalseite des Werkstücks nicht eingeschränkt.

Problemlos ist auch eine Profilierungseinrichtung zum Profilieren der Werkstückschmalseite in die Durchlaufmaschine integrierbar. Hervorragend eignet sich hier eine Fräseinrichtung zur Gestaltung der Werkstückschmalseite. Diese ist dann der Auftragseinrichtung für die Füll- und Verklebungsmasse vorgeschaltet.

Eine Vorglättung der sehr porösen Schmalseite des Werkstücks wird dadurch erzielt, dass der Auftragseinrichtung für die Füll- und Verklebungsmasse eine Schleifeinrichtung zum Schleifen der Werkstückschmalseite vorgeschaltet ist. Durch das Schleifen der Werkstückschmalseite vor dem Auftragen der Masse werden die gröbsten Rauhigkeiten abgetragen. Damit ist ein noch besseres Oberflächenfinish erzielbar.

Die Oberflächenqualität kann gerade bei sehr dünnen Dekorpapieren (Papieren mit einem Flächengewicht von 25-45 g/m²) noch weiter verbessert werden, indem der Andrückeinrichtung ein oder mehrere Glättungseinrichtungen und/oder Kühlungseinrichtungen zum zusätzlichen Glätten des Beschichtungsmaterials bzw. zum Beschleunigen des Erhärtens der Füll- und Verklebungsmasse nachgeordnet sind. Durch das weitere flächige Andrücken des Beschichtungsmaterials wird der Kleber noch besser in die Poren eingedrückt und auf der Oberfläche vergleichmäßigt. Insbesondere durch das Aufbringen eines "Schmiermittels", wie beispielsweise eine öl- oder seifenartige Substanz, auf das Beschichtungsmaterial vor oder während des Andrückens des Beschichtungsmaterials an die Werkstückschmalseite kann dieser Verfahrensschritt optimiert werden. So ist es hierdurch nochmals möglich, die Oberflächenqualität zu steigern. Außerdem kommt es hierbei nicht zu unerwünschten zusätzlichen Erwärmungen, da der Reibungswiderstand verringert werden kann. Als "Schmiermittel" kommen insbesondere auch Substanzen in Frage, die sich bereits nach kurzer Zeit verflüchtigen, so dass das Beschichtungsmaterial nicht extra abgewischt werden muß.

Für das Auftragen des "Schmiermittels" kommen verschiedenste aus dem Stand der Technik an sich geläufige Einrichtungen zum Einsatz. Beispielsweise wenigstens eine Sprühdüse, Auftragsrolle, Schlitzdüse, Streicheinrichtung etc.

Zusammenfassend ist festzuhalten, dass erfindungsgemäß erstmals wesentlich preisgünstigere Werkstoffe zum Einsatz kommen als beim Stand der Technik und trotzdem die Oberflächenqualität der Werkstückschmalseite, insbesondere bei sehr porösen Holzwerkstoffen, zu der der Ober- und Unterseite keinen Unterschied aufweist. Dies wird, wie eingangs erläutert, dadurch erzielt, dass der aufgetragenen Masse eine Mehrfachfunktion übernimmt, nämlich die Funktion eines Füllstoffes zum Ausfüllen der Poren in dem porösen Holzwerkstoff oder dergleichen, wie auch die Kleberfunktion. Erfindungsgemäß ist somit durch Einsparung eines Aggregates eine kurze Baulänge einer entsprechenden Durchlaufmaschine erzielbar. Die Verfahrenstechnik wird hierbei vereinfacht. Es kommen an sich vorhandene Techniken und Materialien zum Einsatz. Außerdem wird der notwendige Personaleinsatz verringert, da beispielsweise nur eine Maschine anstelle von zwei oder mehreren zu bedienen sind. Darüber hinaus ist eine hohe Leistung, d.h. eine hohe Durchgangsrate, erzielbar und gleichzeitig eine bessere Qualität. Schließlich können erstmals derart grobporige Spanplatten minderer Qualität äußerst kostengünstig mit dünnem Dekorpapier beschichtet werden, ohne dass sich dies im äußeren Erscheinungsbild bemerkbar macht.

### Kurze Beschreibung der Zeichnungen

Im Folgenden sind zur weiteren Erläuterung und zum besseren Verständnis der Erfindung mehrere Ausführungsbeispiele unter Bezugnahme auf die beigefügten Zeichnungen näher beschrieben und erläutert. Es zeigt:
- Fig. 1a - 1h: schematisch den erfindungsgemäßen Verfahrensablauf zum Anbringen eines dünnen Dekorpapiers auf der Schmalseite eines Werkstückes, wie beispielsweise eine Spanplatte,
- Fig. 2: eine schematische Darstellung der Anordnung verschiedener Bearbeitungsstationen, die in einer Durchlaufmaschine gemäß der Erfindung hintereinander angeordnet sind,
- Fig. 3: eine beispielhafte Ausführungsform für eine Auftragseinrichtung zum Aufbringen einer kombinierten Füll- und Verklebungsmasse auf die an der Auftragseinrichtung sich kontinuierlich vorbeibewegenden Schmalseite des Werkstückes,
- Fig. 4: eine alternative Ausführungsform für eine Auftragseinrichtung zum Aufbringen einer kombinierten Füll- und Verklebungsmasse,
- Fig. 5: eine schematische Querschnittsansicht auf eine Andrückeinrichtung und
- Fig. 6: mehrere schematische Querschnitte verschieden profilierter Werkstückschmalseiten, die erfindungsgemäß beschichtbar sind.

### Beschreibung von Ausführungsbeispielen der Erfindung

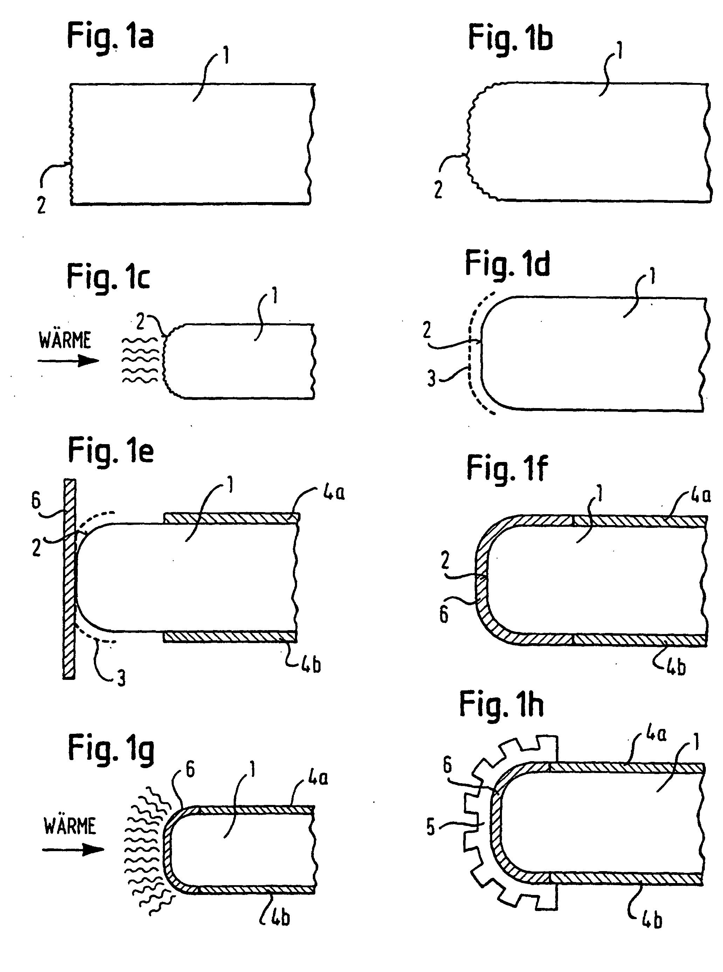

Der grundsätzliche erfindungsgemäße Verfahrensablauf ist in den Fig. 1a - 1h schematis dargestellt. So wird ein Werkstück mit einer porösen Schmalseite 2, wie in der Fig. 1a gezeigt, mit einem gewünschten Profil versehen, wie es aus der Fig. 1b ersichtlich ist. Die derart profilierte Schmalseite 2 des Werkstücks 1 wird nun optional an einer Heizeinrichtung vorbeigeführt, so dass die Schmalseite 2 des Werkstücks 1 vorgewärmt wird (siehe Fig. lc). Auf die vorgewärmte Schmalseite 2 wird nun gemäß der Darstellung der Fig. 1d ein Schmelzkleber 3 flächig auf die Schmalseite 2 des Werkstücks 1 aufgebracht. Unmittelbar danach erfolgt, wie in Fig. 1e gezeigt, die Zuführung des Kantenbeschichtungsmaterials 6. Hierbei wird das Kantenmaterial 6 auf die Kleberschicht aufgedrückt und der Profilgebung der Schmalseite 2 entsprechend angelegt und angedrückt. Wie beispielhaft in den Fig. 1e - 1h dargestellt, weist hier das Werkstück 1 eine obere und untere Frontbeschichtung 4a bzw. Rückseitenbeschichtung 4b auf. Dies ist nicht unbedingt notwendig, es kann auch nur das Kantenmaterial 6 seitlich angeklebt werden. Nach dem Anschmiegen des Kantenmaterials und Glättens an die Schmalseite 2 gemäß der Fig. 1f wird nochmals, wie in Fig. 1g gezeigt, Wärme auf die Schmalseite mit den darauf befindlichen angeschmiegten Beschichtungsmaterial 6 aufgebracht. Hiernach erfolgt ein Glättvorgang mit einem Glättelement 5, wie es in der Fig. 1h gezeigt ist.

Hiermit ist eine hervorragende Oberflächenqualität erzielt, da bis zum Glätten mit dem Glättelement 5 der Schmelzkleber 3 noch nicht vollständig erhärtet ist, so daß möglicherweise noch vorhandene Unregelmäßigkeiten an der Oberfläche des Beschichtungsmaterials geglättet werden können.

Wesentlich für die Erfindung sind die Schritte gemäß der Fig. 1d, 1e und 1f. Alle anderen hier schematisch dargestellten Verfahrensschritte sind optional. Dies gilt auch für den Glättvorgang gemäß der Fig. 1h. Denn je nach Dicke des Kantenmaterials 6 und der Porösität der Schmalseite 2 des Werkstücks 1 muss ein Glättvorgang nicht explizit durchgeführt werden. Es reicht unter Umständen das Andrücken des Kantenmaterials 6 an die Schmalseite 2 gemäß der Fig. 1f aus.

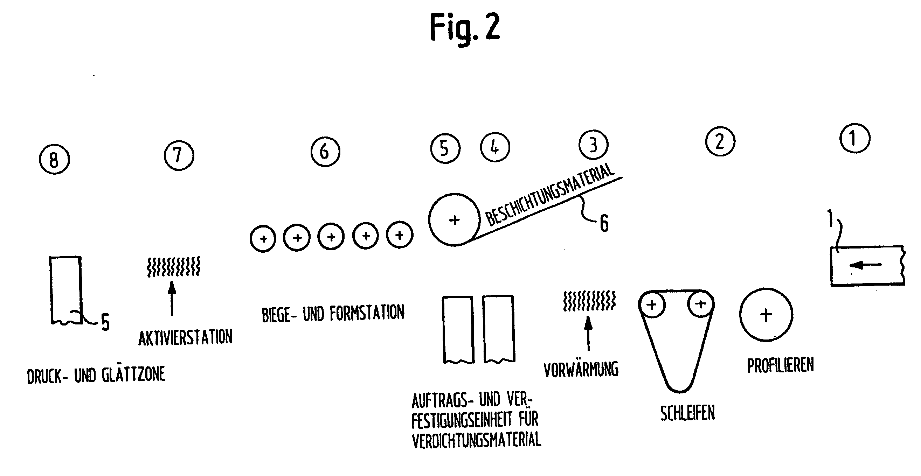

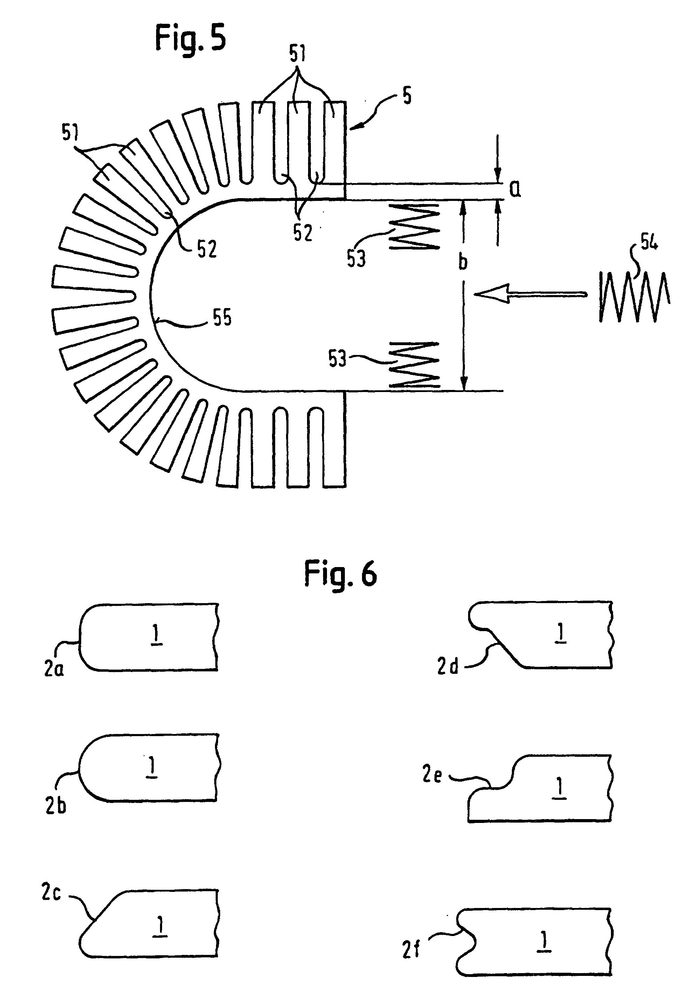

In der Fig. 2 ist eine entsprechende Durchlaufmaschine zur Durchführung des zuvor erläuterten Verfahrens sehr schematisch dargestellt. In der Durchlaufmaschine wird im Einlauf ① das Werkstück 1 eingeführt und bis zum Abschnitt ⑧ kontinuierlich durch die Maschine an den einzelnen Bearbeitungsaggregaten vorbei gefördert. Hier folgt im Abschnitt ② das optionale Fräsen und Schleifen der Schmalseite des Werkstücks 1 und im Abschnitt ③ eine Vorwärmung der Werkstückschmalseite. In den Abschnitten ④ und ⑤ der Durchlaufmaschine wird die Füll- und Verklebungsmasse auf die Schmalseite des Werkstücks 1 aufgebracht und gleichzeitig das Beschichtungsmaterial 6 unmittelbar danach zugeführt. In dem Abschnitt ⑥ erfolgt der "Anlege- bzw. -schmiegevorgang" des Beschichtungsmaterials 6 an die Schmalseite 2 des Werkstücks 1. Hieran schließt sich eine Aktivierstation ⑦ an, mit der die Füll- und Verklebungsmasse aktiviert wird, also zum Aushärten gebracht wird. Eine optionale Druck- und Glättzone ⑧ folgt auf die Aktivierstation. Die Druck- und Glättzone umfasst ein oder mehrere Gleitelemente 5, die später noch unter Bezugnahme auf die Fig. 5 erläutert werden.

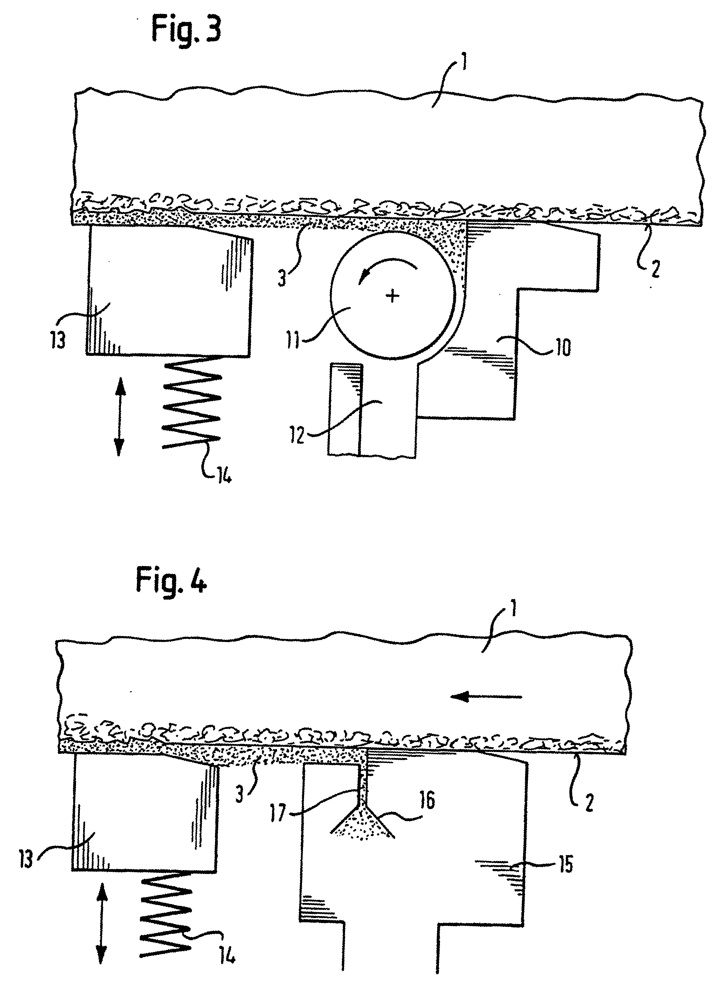

Die Fig. 3 zeigt eine erste Ausführungsform einer Auftrags- und Glattstreicheinrichtung für die Füll- und Vergütungsmasse 3. Diese erste Ausführungsform umfasst eine Auftragsrolle 11, die in einem sich an die Schmalseite 2 des Werkstücks 1 annäherndes Gehäuse 10 gelagert ist. Die Auftragsrolle 11 erstreckt sich über die gesamte Breite der Schmalseite 2 des Werkstücks 1 und ist von dieser geringfügig beabstandet gehalten. Auf einer Seite des Umfangs der Auftragsrolle 11 ist ein Kanal 12 ausgebildet, durch den die Füll- und Vergütungsmasse 3 zur Auftragsrolle 11 geführt wird. Durch Drehen der Auftragsrolle 11 wird die Füll- und Verklebungsmasse 3 gleichmäßig auf die Schmalseite 2 des Werkstückes 1 aufgetragen und durch die sich anschließende Glattstreicheinrichtung (Heißeinspachteleinrichtung) 13 vergleichmäßigt und in die Poren eingedrückt. Die Heißeinspachteleinrichtung 13 ist durch eine Feder 14 federnd gelagert und kann somit die aufgetragene Füll- und Auftragsmasse 3 mit einem gewissen Druck in die Poren der Schmalseite 3 des Werkstücks 1 einpressen.

In der Fig. 4 ist eine zweite Ausführungsform für die Auftragseinrichtung der Füll- und Auftragsmasse 3 gezeigt. Diese unterscheidet sich darin, dass anstatt der Auftragsrolle 11 eine Schlitzdüse 16 vorhanden ist, die in einem Gehäuse 15 ausgebildet ist. Der Schlitzkanal 17 erstreckt sich über die gesamte Breite der Werkstückschmalseite 2 und die Füll- und Verklebungsmasse 3 wird durch Herausdrücken der Masse aus dem Kanal 17 auf die Schmalseite 2 aufgetragen. Auch dieser Auftragseinrichtung schließt sich eine Heißspachteleinrichtung an, die mit der der ersten Ausführungsform gemäß der Fig. 3 übereinstimmt.

Die Fig. 5 zeigt schematisch einen Querschnitt eines Glättelements 5, wie es in dem Abschnitt ⑧ der Durchlaufmaschine gemäß der Fig. 2 zum Einsatz kommt. Das Glättelement 5 ist aus einem flexiblen Material hergestellt und weist innenseitig eine der Profilform des Werkstücks 1 angepasste Form auf. Die Form ist jedoch der Profilform des Werkstücks nur ähnlich und erst durch Andrücken des Glättelements 5 an die Profilform wird eine vollständige Kontaktierung erzielt. Dies geschieht durch das Aufweiten des Glättelements 5, wie es schematisch durch die Lagerung 53, 54 veranschaulicht ist. Die Gleitfläche 55 erstreckt sich über eine gewisse Länge in Durchlaufrichtung des Werkstückes 1, so dass ein flächiges Andrücken und Glätten des auf die Schmalseite 2 des Werkstücks 1 aufgebrachten Beschichtungsmaterials 6 erfolgt.

Die Gleitfläche 55 ist optional mit einem reibungsarmen Material beschichtet, beispielsweise mit Teflon. Hervorragend eignet sich als Werkstoff für die Gleitfläche 55 auch Polyamid, ein Kohlekompound oder Kunststoff mit Glas. Um die Flexibilität zu erhöhen, jedoch in Längsrichtung eine gewisse Steifigkeit zu erzielen, so dass ein sehr gutes Oberflächenfinish erzielbar ist, sind im Querschnitt sich radial erstreckende Längsrippen 51 und Längsschlitze 52 ausgebildet. Durch die Anzahl der Längsrippen 51 und Längsschlitze 52 und die Brüstungsdicke a kann die Formabhängigkeit variiert werden. Die Anzahl der Glättelemente 5 in einer Durchlaufmaschine gemäß der Erfindung ist von der Form- und der Vorschubgeschwindigkeit abhängig.

In der Fig. 6 sind schließlich noch einige Beispiele für mit dem erfindungsgemäßen Verfahren zu beschichtende Profilschmalseiten 2a bis 2f gezeigt. So sind einfache abgerundete Profile wie auch mehrere Krümmungen aufweisende Profile 2d bis 2f gezeigt.

## Patentansprüche

1. Durchlaufverfahren, mit dem poröse Schmalseiten von Werkstücken (1) aus Holz- oder Holzaustauschwerkstoffen oder holzähnlichen Werkstoffen in einem Durchlauf vergütet, mit einem separaten Beschichtungsmaterial (6) beschichtet und hiermit verklebt werden, indem
a) auf die Schmalseite (2) des sich kontinuierlich bewegenden Werkstücks (1) eine kombinierte Füllund Verklebungsmasse (3) aufgetragen wird,
b) auf die aufgetragene und noch klebefähige Füll- und Verklebungsmasse(3) das separate Beschichtungsmaterial (6) aufgebracht wird und
c) das Beschichtungsmaterial (6) an die Profilform der Werkstückschmalseite (2) angedrückt und mittels der Füll- und Verklebungsmasse (3) hiermit verklebt wird,
**dadurch gekennzeichnet, dass** im Schritt a) die kombinierte Füll- und Verklebungsmasse (3) auf die Schmalseite (2) des sich kontinuierlich bewegenden Werkstücks (1) erhaben aufgetragen wird, und dass im Schritt c) das Beschichtungsmaterial (6) derart stark flächig angedrückt wird, dass die darunter befindliche, noch klebefähige Füll- und Verklebungsmasse (3) in den porösen Werkstoff (1) eingepresst wird, zum anderen aber auch das Beschichtungsmaterial (6) an die derart geglättete Werkstückschmalseite (2) angeformt und hiermit verklebt wird.

2. Durchlaufverfahren nach Anspruch 1, **dadurch gekennzeichnet, dass** die Schmalseite (2) des Werkstücks (1) vor dem Schritt a) mit einer gewünschten . Profilform (2a, 2b, 2c, 2d, 2e, 2f) versehen wird und hiernach optional einem Schleifvorgang unterzogen wird.

3. Durchlaufverfahren nach Anspruch 1 oder 2, **dadurch gekennzeichnet, dass** die Schmalseite (2) des Werkstücks (1) vor dem Schritt a) bzw. nach dem Profilieren und dem optionalen Schleifen vorgewärmt wird.

4. Durchlaufverfahren nach Anspruch 1, **dadurch gekennzeichnet, dass** der Schmalseite (2) des Werkstücks (1) nach dem Schritt b) Wärme zugeführt wird.

5. Durchlaufverfahren nach Anspruch 1, **dadurch gekennzeichnet, dass** der Schritt c) mittels eines elastischen, sich der Profilform der Werkstückschmalseite (2) anpassenden Glättelements (5) durchgeführt wird oder ein mit dem Glättelement (5) durchgeführter Glättungsvorgang nach dem Schritt c) durchgeführt wird.

6. Durchlaufverfahren nach Anspruch 5, **dadurch gekennzeichnet, dass** das Glättelement (5) eine der Profilform der Werkstückschmalseite (2) ähnliche Gleitfläche (55) hat, die als Negativform der profilierten Schmalseite (2) des Werkstücks (1) geringfügig kleiner ist und sich erst unter Druckaufbringung vollständig an die Profilform der Werkstückschmalseite (2) anlegt.

7. Durchlaufverfahren nach Anspruch 1, **dadurch gekennzeichnet, dass** die Haftfähigkeit der Füll- und Verklebungsmasse (3) durch aktives Kühlen des aufgeklebten Beschichtungsmaterials (6) unterstützt wird.

8. Durchlaufverfahren nach Anspruch 1, **dadurch gekennzeichnet, dass** die Füll- und Verklebungsmasse (3) auf die Schmalseite (2) aufgesprüht oder aufgerollt wird oder mittels einer Schlitzdüse (15, 16) und einer Auftrageinrichtung, insbesondere eine Heißspachtel (13), gleichzeitig aufgetragen und in die poröse Oberfläche der Werkstückschmalseite (2) eingepresst wird.

9. Durchlaufverfahren nach einem der vorhergehenden Ansprüche, **dadurch gekennzeichnet, dass** die Füll- und Verklebungsmasse ein Klebstoffsystem ist, das eine thermoplastische Masse (3) auf EVA-, Polyamid-, Polyolefin oder PU-Basis umfasst.

10. Durchlaufverfahren nach einem der Ansprüche 1-6,
**dadurch gekennzeichnet, dass** das Werkstück eine Spanplatte ist.

11. Durchlaufmaschine, in der eine poröse Schmalseite (2) eines Werkstücks (1) aus Holz- oder Holzersatzwerkstoff oder holzähnlichem Werkstoff in einem Durchlauf vergütet, mit einem separaten Beschichtungsmaterial (2) beschichtet und hiermit verklebt wird, mit
- einer Fördereinrichtung zum kontinuierlichen Fördern des Werkstücks (1) durch die Durchlaufmaschine,
- einer Auftragseinrichtung (10, 11, 12; 15, 16, 17) zum Aufbringen einer kombinierten Füll- und Verklebungsmasse (3) auf die an der Auftragseinrichtung (10, 11, 12; 15, 16, 17) sich kontinuierlich vorbeibewegende Schmalseite (2) des Werkstücks (1),
- einer Zuführeinrichtung zum kontinuierlichen Zuführen des separaten Beschichtungsmaterials (6) auf die aufgetragene und noch klebefähige Füll- und Verklebungsmasse(3) und
- einer Andrückeinrichtung mit vorzugsweise einer in Förderrichtung des Werkstücks (1) sich längserstreckenden und der Profilform der Werkstückschmalseite sich anpassenden Gleitfläche (55) zum Andrücken des Beschichtungsmaterials (6) formangepasst an die Werkstückschmalseite (2) unter Druck und zum Einpressen der darunter befindlichen Füll- und Verklebungsmasse (3) in die poröse Oberfläche der Schmalseite (2) des Werkstücks (1),
**dadurch gekennzeichnet, dass** die Auftragseinrichtung für ein erhaben Aufbringen der Füll- und Verklebungsmasse gestaltet ist und die Andrückeinrichtung mehrere Rollen umfasst, die das Beschichtungsmaterial (6) an die Schmalseite andrücken und insbesondere ein Glättelement (5) nachgeschaltet ist, das eine der Profilform der Werkstückschmalseite (2) ähnliche, aber insgesamt geringfügig kleinere Gleitfläche hat, die unter Druckaufbringung an die gesamte, mit dem Beschichtungsmaterial versehene Werkstückschmalseite (2) anlegbar ist.

12. Durchlaufmaschine nach Anspruch 11, **dadurch gekennzeichnet, dass** das Glättelement (5) an seiner der Gleitfläche (55) entgegengesetzten Außenseite sich im Querschnitt senkrecht zur Gleitfläche erstreckende Längsrippen und Längsschlitze aufweist.

13. Durchlaufmaschine nach Anspruch 11, **dadurch gekennzeichnet, dass** der Auftragseinrichtung (10, 11, 12; 15, 16, 17) für die Füll- und Verklebungsmasse (3) eine Profilierungseinrichtung, insbesondere Fräseinrichtung, zur Profilgestaltung der Werkstückschmalseite (2) vorgeschaltet ist.

14. Durchlaufmaschine nach Anspruch 11, **dadurch gekennzeichnet, dass** der Auftragseinrichtung (10, 11, 12; 15, 16, 17) für.die Füll- und Verklebungsmasse (3) eine Schleifeinrichtung zum Schleifen der Werkstückschmalseite (2) vorgeschaltet ist.

15. Durchlaufmaschine nach Anspruch 11, **dadurch gekennzeichnet, dass** unmittelbar vor der Auftragseinrichtung (10, 11, 12; 15, 16, 17) für die Füll- und Verklebungsmasse (3) eine Heizeinrichtung zum Erwärmen der Werkstückschmalseite (2) angeordnet ist.

16. Durchlaufmaschine nach Anspruch 11, **dadurch gekennzeichnet, dass** unmittelbar vor der Andrückeinrichtung für die Füll- und Verklebungsmasse eine Heizeinrichtung zum Erwärmen der Werkstückschmalseite (2) mit dem darauf befindlichen Beschichtungsmaterial (6) angeordnet ist.

17. Durchlaufmaschine nach Anspruch 11, **dadurch gekennzeichnet, dass** der Andrückeinrichtung ein oder mehrere Glättungseinrichtungen und/oder Kühlungseinrichtungen zum zusätzlichen Glätten des Beschichtungsmaterials bzw. zum Beschleunigen des Erhärtens der Füll- und Verklebungsmasse nachgeordnet sind.

18. Durchlaufmaschine nach Anspruch 11, **dadurch gekennzeichnet, dass** vor oder in der Andrückeinrichtung wenigstens eine Einrichtung zum Auftragen eines reibungsmindernden Mittels auf das Beschichtungsmaterial angeordnet ist

19. Durchlaufmaschine nach Anspruch 18, **dadurch gekennzeichnet, dass** die Einrichtung zum Auftragen eines reibungsmindernden Mittels auf das Beschichtungsmaterial wenigstens eine Sprühdüse, Autragsrolle, Schlitzdüse, Streicheinrichtung umfasst.

20. Werkstück mit an der porösen Schmalseite im Durchlaufverfahren nach einem Ansprüche 1-11 aufgebrachten, zuvor separaten Beschichtungsmaterial (6), bei dem die erhärtete kombinierte Füll- und Verklebungsmasse (3) die poröse Oberfläche der Werkstückschmalseite (2) überdeckt und diese damit durch Auffüllen der Poren vergleichmässigt und überdies auch das Beschichtungsmaterial (6) an die Schmalseite bindet.

21. Werkstück nach Anspruch 20, **dadurch gekennzeichnet, dass** es sich um eine Spanplatte handelt.

22. Werkstück nach Anspruch 20, **dadurch gekennzeichnet, dass** die Füll- und Verklebungsmasse eine thermoplastische Masse (3) auf EVA-, Polyamid-, Polyolefin oder PU-Basis ist.

23. Werkstück nach Anspruch 20, **dadurch gekennzeichnet, dass** das Beschichtungsmaterial, insbesondere ein Dekorpapier, ein Flächengewicht von 20-80 g/m² hat.

24. Werkstück nach Anspruch 23, **dadurch gekennzeichnet, dass** das Dekorpapier ein Melaminharzpapier ist und insbesondere ein Flächengewicht von 25- 50 g/m² hat.

## Claims

1. Continuous process whereby porous edges of work pieces
(1) made of wood or wood substitute materials or wood-like materials are improved in one pass, coated with a separate coating material (6) and adhered thereto by
a) applying a combined filling and adhesive composition (3) to the edge (2) of the continuously moving work piece (1),
b) applying the separate coating material (6) to the filling and adhesive composition (3) which has been applied and is still capable of adhesion, and
c) pressing the coating material (6) against the profile shape of the work piece edge (2) and adhering it thereto by means of the filling and adhesive composition (3),
**characterised in that** in step a) the combined filling and adhesive composition (3) is applied in raised form to the edge (2) of the continuously moving work piece (1), and **in that** in step c) the coating material (6) is pressed in planar relationship so hard that the filling and adhesive composition (3) which is underneath and still capable of adhesion is forced into the porous material (1), but on the other hand the coating material (6) is also moulded onto the work piece edge (2) smoothed down in this way, and adhered thereto.

2. Continuous process according to claim 1, **characterised in that** before step a) the edge (2) of the work piece (1) is provided with a desired profile shape (2a, 2b, 2c, 2d, 2e, 2f) and then optionally subjected to a grinding operation.

3. Continuous process according to claim 1 or 2, **characterised in that** the edge (2) of the work piece (1) is preheated before step a) or after profiling and optional grinding.

4. Continuous process according to claim 1, **characterised in that** heat is delivered to the edge (2) of the work piece (1) after step b).

5. Continuous process according to claim 1, **characterised in that** step c) is performed by means of a resilient smoothing element (5) which adapts to the profile shape of the work piece edge (2), or a smoothing operation performed with the smoothing element (5) is performed after step c).

6. Continuous process according to claim 5, **characterised in that** the smoothing element (5) has a sliding surface (55) which is similar to the profile shape of the work piece edge (2) and which is slightly smaller than the negative shape of the profiled edge (2) of the work piece (1) and is fully applied to the profile shape of the work piece edge (2) only upon application of pressure.

7. Continuous process according to claim 1, **characterised in that** the adhesive capacity of the filling and adhesive composition (3) is assisted by active cooling of the adhered coating material (6).

8. Continuous process according to claim 1, **characterised in that** the filling and adhesive composition (3) is sprayed or rolled onto the edge (2) or simultaneously applied by means of a slot nozzle (15, 16) and an applicator, in particular a hot spatula (13) and forced into the porous surface of the work piece edge (2).

9. Continuous process according to any of the preceding claims, **characterised in that** the filling and adhesive composition is an adhesive system which includes a thermoplastic composition (3) based on EVA, polyamide, polyolefin or PU.

10. Continuous process according to any of claims 1-6, **characterised in that** the work piece is a chipboard.

11. Continuous machine in which a porous edge (2) of a work piece (1) made of wood or wood substitute material or wood-like material is improved in one pass, coated with a separate coating material (6) and adhered thereto, with
- a conveying device for continuously conveying the work piece (1) through the continuous machine,
- an applicator (10, 11, 12; 15, 16, 17) for applying a combined filling and adhesive composition (3) to the edge (2) of the work piece (1) moving continuously past the applicator (10, 11, 12; 15, 16, 17),
- a feeder for continuously feeding the separate coating material (6) to the filling and adhesive composition (3) which has been applied and is still capable of adhesion, and
- a pressing device with preferably a sliding surface (55) extending longitudinally in the direction of conveying of the work piece (1) and adapting to the profile shape of the work piece edge, for pressing the coating material (6) with adapted shape against the work piece edge (2) under pressure and for forcing the filling and adhesive composition (3) underneath into the porous surface of the edge (2) of the work piece (1),
**characterised in that** the applicator is designed for raised application of the filling and adhesive composition and the pressing device includes several rollers which press the coating material (6) against the edge and in particular behind is mounted a smoothing element (5) which has a sliding surface similar to the profile shape of the work piece edge (2) but overall slightly smaller, which can be applied to the whole work piece edge (2) provided with the coating material, applying pressure.

12. Continuous machine according to claim 11, **characterised in that** the smoothing element (5) on its outer side opposite the sliding surface (55) comprises longitudinal ribs and longitudinal slots extending perpendicularly to the sliding surface in cross-section.

13. Continuous machine according to claim 11, **characterised in that** in front of the applicator (10, 11, 12; 15, 16, 17) for the filling and adhesive composition (3) is mounted a profiling device, in particular milling device, for profile shaping of the work piece edge (2).

14. Continuous machine according to claim 11, **characterised in that** in front of the applicator (10, 11, 12; 15, 16, 17) for the filling and adhesive composition (3) is mounted a grinding device for grinding the work piece edge (2).

15. Continuous machine according to claim 11, **characterised in that** immediately in front of the applicator (10, 11, 12; 15, 16, 17) for the filling and adhesive composition (3) is mounted a heating device for heating the work piece edge (2).

16. Continuous machine according to claim 11, **characterised in that** immediately in front of the pressing device for the filling and adhesive composition is mounted a heating device for heating the work piece edge (2) with the coating material (6) located thereon.

17. Continuous machine according to claim 11, **characterised in that** behind the pressing device are mounted one or more smoothing devices and/or cooling devices for additional smoothing of the coating material or for accelerating hardening of the filling and adhesive composition.

18. Continuous machine according to claim 11, **characterised in that** in front of or in the pressing device is arranged at least one device for applying a friction-reducing agent to the coating material.

19. Continuous machine according to claim 18, **characterised in that** the device for applying a friction-reducing agent to the coating material includes at least one spray nozzle, applicator roller, slot nozzle, painting device.

20. Work piece with previously separate coating material (6) applied to the porous edge by a continuous method according to any of claims 1-11, in which the hardened combined filling and adhesive composition (3) covers the porous surface of the work piece edge (2) and so makes the latter even by filling up the pores and moreover also bonds the coating material (6) to the edge.

21. Work piece according to claim 20, **characterised in that** it is a chipboard.

22. Work piece according to claim 20, **characterised in that** the filling and adhesive composition is a thermoplastic composition (3) based on EVA, polyamide, polyolefin or PU.

23. Work piece according to claim 20, **characterised in that** the coating material, in particular a decorative paper, has a basis weight of 20-60 g/m².

24. Work piece according to claim 23, **characterised in that** the decorative paper is a melamine resin paper and in particular has a basis weight of 25-50 g/m².

## Revendications

1. Procédé à exécution continue par lequel des chants poreux de pièces à usiner (1) à base de matériaux de bois ou de matériaux de substitution de bois ou de matériaux similaires au bois sont traités au cours d'une passe, sont enduits avec un matériau de revêtement (6) séparé et sont collés avec celui-ci, suivant lequel
a) une masse mixte de charge et de collage (3) est appliquée sur le chant (2) de la pièce (1) se déplaçant de façon continue,
b) le matériau de revêtement (6) séparé est appliqué sur la masse de charge et de collage (3) appliquée et encore collante et
c) le matériau de revêtement (6) est appuyé sur le profil du chant de la pièce à usiner (2) et est collé avec celui-ci au moyen de la masse de charge et de collage (3),
**caractérisé en ce que**, lors de l'étape (a), la masse mixte de charge et de collage (3) est appliquée en relief sur le chant (2) de la pièce à usiner (1) se déplaçant de façon continue et **en ce que**, lors de l'étape (c), le matériau de revêtement (6) est appuyé fortement en surface de façon que la masse de charge et de collage (3) se trouvant au-dessous et encore collante soit enfoncée dans le matériau (1) poreux, mais que d'autre part également le matériau de revêtement (6) soit formé sur le chant de la pièce à usiner (2) ainsi lissé et soit collé avec celui-ci.

2. Procédé selon la revendication 1, **caractérisé en ce que** le chant (2) de la pièce à usiner (1) est pourvu avant l'étape (a) d'une forme profilée (2a, 2b, 2c, 2d, 2e, 2f) souhaitée et est soumis ensuite de façon optionnelle à une opération de meulage.

3. Procédé selon la revendication 1 ou 2, **caractérisé en ce que** le chant (2) de la pièce à usiner (1) est préchauffé avant l'étape (a) ou après le profilage et le meulage optionnel.

4. Procédé selon la revendication 1, **caractérisé en ce que** de la chaleur est amenée au chant (2) de la pièce à usiner (1) après l'étape (b).

5. Procédé selon la revendication 1, **caractérisé en ce que** l'étape (c) est effectuée au moyen d'un élément de lissage (5) élastique et s'adaptant à la forme profilée du chant de la pièce à usiner (2) ou bien une opération de lissage effectuée avec l'élément de lissage (5) est effectuée après l'étape (c).

6. Procédé selon la revendication 5, **caractérisé en ce que** l'élément de lissage (5) a une surface de glissement (55) identique au profil du chant de pièce à usiner (2), qui est légèrement plus petite en tant que forme négative du chant profilé (2) de la pièce à usiner (1) et est placée complètement le profil du chant de la pièce à usiner (2) seulement par application par pression.

7. Procédé continu selon la revendication 1, **caractérisé en ce que** l'adhérence de la masse de remplissage et de collage (3) est favorisée par le refroidissement actif du matériau de revêtement (6) collé dessus.

8. Procédé continu selon la revendication 1, **caractérisé en ce que** la masse de charge et de collage (3) est pulvérisée ou enroulée sur le chant (2) ou bien est appliquée simultanément au moyen d'une buse à fente (15, 16) et d'un système d'application, en particulier une spatule chaude (13), et est enfoncée dans la surface poreuse du chant de la pièce à usiner (2).

9. Procédé continu selon l'une quelconque des revendications précédentes, **caractérisé en ce que** la masse de charge et de collage est un système de colle qui comprend une masse (3) thermoplastique à base de EVA (copolymère éthylène-acétate de vinyle) de polyamide, de polyoléfine ou de polyuréthanne.

10. Procédé continu selon l'une quelconque des revendications 1 à 6, **caractérisé en ce que** la pièce à usiner est un panneau de particules.

11. Machine à fonctionnement continu, dans laquelle un chant (2) poreux d'une pièce à usiner (1) à base de matériau de bois ou de matériau de substitution du bois ou de matériau identique au bois est traité au cours d'une passe, est enduit avec un matériau de revêtement (2) séparé et est collé avec celui-ci, comprenant
- un système de transport pour le transport continu de la pièce à usiner (1) dans la machine à processus continu,
- un système d'application (10, 11, 12; 15, 16, 17) pour l'application d'une masse mixte de charge et de collage (3) sur le chant (2) de la pièce à usiner (1) qui se déplace de façon continue sur le système d'application (10, 11, 12; 15, 16, 17),
- un dispositif d'alimentation pour l'arrivée continue du matériau de revêtement (6) séparé sur la masse de charge et de collage (3) appliquée et encore collante et
- un dispositif de pression avec de préférence une surface de glissement (55) s'étendant en longueur dans le sens de transport de la pièce (1) et s'adaptant au profil du chant de la pièce pour presser le matériau de revêtement (6) de façon conforme sur le chant de la pièce (2) sous pression et pour enfoncer la masse de charge et de collage (3) se trouvant dessous dans la surface poreuse du chant (2) de la pièce à usiner (1), **caractérisé en ce que** le dispositif de pression est conçu pour une application en relief de la matière de charge et de collage et **en ce que** le dispositif de pression comprend plusieurs rouleaux qui appuient le matériau de revêtement (6) sur le chant et en particulier un élément de lissage (5) est monté en aval, lequel a une surface de glissement identique au profil du chant de la pièce à usiner (2), mais globalement légèrement inférieure, qui peut être placée par application de pression sur l'ensemble du chant de la pièce à usiner (2) pourvu du matériau de revêtement.

12. Machine selon la revendication 11, **caractérisée en ce que** l'élément de lissage (5) présente des nervures longitudinales et des fentes longitudinales s'étendant en coupe perpendiculairement à la surface de glissement sur son côté extérieur opposé à la surface de glissement (55).

13. Machine selon la revendication 11, **caractérisée en ce qu'**un dispositif de profilage, en particulier un dispositif de fraisage, pour la conception du profil du chant de la pièce à usiner (2) est monté en amont du dispositif d'application (10, 11, 12 ; 15, 16, 17) pour la matière de charge et de collage (3).

14. Machine selon la revendication 11, **caractérisée en ce qu'**un dispositif de meulage pour le meulage du chant de pièce à usiner (2) est monté en amont du dispositif d'application (10, 11, 12 ; 15, 16, 17) pour la masse de charge et de collage (3).

15. Machine selon la revendication 11, **caractérisée en ce qu'**un dispositif de chauffage pour le réchauffement du chant de la pièce à usiner (2) est disposé juste avant le dispositif d'application (10, 11, 12; 15, 16, 17) pour la masse de charge et de collage (3).

16. Machine selon la revendication 11, **caractérisée en ce qu'**un dispositif de chauffage pour le réchauffement du chant de la pièce à usiner (2) avec le matériau de revêtement (6) se trouvant dessus est disposé juste avant le dispositif de pression pour la masse de charge et de collage.

17. Machine selon la revendication 11, **caractérisée en ce qu'**un ou plusieurs dispositifs de lissage et/ou dispositifs de refroidissement pour le lissage supplémentaire du matériau de revêtement et pour l'accélération du durcissement de la masse de charge et de collage sont disposés en aval du dispositif de pression.

18. Machine selon la revendication 11, **caractérisée en ce qu'**au moins un dispositif pour l'application d'un moyen de réduction de frottement sur le matériau de revêtement est disposé avant ou dans le dispositif de pression.

19. Machine selon la revendication 18, **caractérisée en ce que** le dispositif pour l'application d'un agent de réduction de frottement sur le matériau de revêtement comprend au moins une buse de pulvérisation, un rouleau d'application, une buse à fente, un dispositif d'enduction.

20. Pièce à usiner avec du matériau de revêtement (6) appliqué sur le chant poreux selon le procédé à exécution continue selon l'une quelconque des revendications 1 à 11 et séparé auparavant, avec laquelle la masse de charge et de collage (3) durcie et mixte recouvre la surface poreuse du chant de la pièce à usiner (12), l'uniformise ainsi par remplissage des pores et en outre lie également le matériau de revêtement (6) au chant.

21. Pièce à usiner selon la revendication 20, **caractérisée en ce qu'**il s'agit d'un panneau de particules.

22. Pièce à usiner selon la revendication 20, **caractérisée en ce que** la masse de charge et de collage est une masse (3) thermoplastique à base de EVA, de polyamide, de polyoléfine ou de polyuréthanne.

23. Pièce à usiner selon la revendication 20, **caractérisée en ce que** le matériau de revêtement, en particulier un papier décoratif, a un poids surfacique de 20-80 g/m².

24. Pièce à usiner selon la revendication 23, **caractérisée en ce que** le papier décoratif est un papier de résine de mélanine et a en particulier un poids surfacique de 25-50 g/m².
